# EUROPEAN PATENT APPLICATION

(11) **EP 4 015 964 A1**
(43) Date of publication of application: **22.06.2022**
(21) Application number: 21214653.4
(22) Date of filing: 15.12.2021
(51) Int. Cl.: F28D 9/00, F28F 3/04, F28F 3/10, F28F 9/00

(54) **GASKET UNIT INSERT FOR HEAT EXCHANGER**

(30) Priority: 16.12.2020 DK PA202070840
(71) Applicant: Danfoss A/S, 6430 Nordborg (DK)
(72) Inventor: NIELSEN, Helge, 6430 Nordborg (DK)
(74) Representative: Inspicos P/S

(57) **Abstract**

The present invention relates to a gasket unit adapted to be sandwiched between the rim regions of two adjacent heat transfer plates of a plate heat exchanger, where the gasket is formed of a base part with a gasket on the surface.

## Description

### BACKGROUND

A traditional construction of a plate heat exchanger comprises a plurality of heat transfer plate stacked on top of each other. The heat transfer plates are formed with patterns such that flow paths are formed between each set of neighboring heat transfer plates. Inlets and outlets for fluids to the flow paths may be formed as openings in the heat transfer plates. Some heat exchangers have the plates brazed together, whereas in others heat exchangers gaskets are positioned between the heat transfer plates in gasket grooves formed in the heat transfer plates. The gasket then is arranged at an edge portion of the heat transfer plate to seal the flow paths and at an area around the openings to seal pairs of the openings, such that only two of them have flow access to the flow path formed at one side of the heat transfer plate, while the other two is sealed therefrom.

Frame plates may be connected and fastened to the stack of heat exchangers plates, such as at the top and bottom, and has a significant thickness compared to the heat transfer plates to take up great loads.

It is a known problem for gasket heat exchangers, that the gasket tends to be deformed and/or pressed slightly out of position. A further problem is the heat transfer plates traditionally are shaped with patterns at the rim and in the opening areas, in addition to the patterns in the heat transfer sections. This often makes the plate quite complex plate to manufacture and increases the possibility of misalignment when assembled in the heat exchanger. It also increases the possibility for introducing weak spots or areas in the plates. The present invention aims to overcome such problems.

### SUMMARY OF THE INVENTION

To solve such problems the present invention introduces a gasket unit adapted to be sandwiched between the rim regions of two adjacent heat transfer plates of a plate heat exchanger, where the gasket is formed of a base part with a gasket on the surface.

The base part may be substantially more rigid and incompressible than the gasket material.

The base part may be incompressible to the forces prevailing in an assembled heat exchanger to prevent significant deformation when assembled into the heat exchanger, whereas the gasket is made of a material sufficiently soft to be compressed and deformed when sandwiched between the two heat exchanger plates to ensure full contact.

The gasket part may be formed on both surfaces of the base part adapted to face the respective two heat exchanger plates to seal against both an upper and lower heat transfer plate.

The gasket may encircle an inner hollow of said base part, where the inner hollow may be adapted for the two heat transfer plates to contact in a heat transferring area defined by said two heat transfer plates when connected in a heat exchanger.

The base part may be formed with a sealed diagonal support with a diagonal gasket section adapted to separate a spacer opening for the first or second flow path opening from the inner hollow and adapted to be positioned in the diagonal area of a heat transfer plate adapted to seal fluid communication between the respective first or second flow path and the heat transferring area of the heat transfer plate.

In an embodiment, a second gasket separated from the gasket encircles a first or second flow path opening.

The gasket may be incorporated as a part of the base unit.

The gasket may be moulded to the spacer, such as by injection moulding.

The base part may include an outer gasket-free section and inner gasket section with the gasket, where both sections are adapted to contact the two heat transfer plates, where only the gasket is adapted to be compressed between the two heat transfer plates.

The present invention further introduces a heat exchanger formed of a stack of structured heat transfer plates each provided with two pairs of openings, each pair providing an inlet and outlet to respectively a first flow path at the one side and a second flow path at the second side of the heat transfer plate, and where a gasket unit according to any of the preceding claims is positioned between at least two adjoining neighbouring heat transfer plates in a plate rim region.

The the gasket unit in the heat exchanger may be positioned between any two adjoining neighbouring heat transfer plates.

The stack of heat transfer plates may be positioned between two frame plates, and where a gasket unit is positioned between a frame plate and the adjoining neighbouring heat transfer plate.

### FIGURES

- Fig. 1: Gasket type plate heat exchanger and heat transfer plate according to prior art.
- Fig. 2: Illustration of elements of spacers with gasket and heat transfer plates
- Fig. 3: Illustration of a spacer with integrated gasket
- Figs. 4A, 4B: Illustration of the top and bottom views of a part of a spacer with integrated gasket in the diagonal areas
- Fig. 5: Heat transfer plate adapted for a spacer and gasket
- Figs. 6A, 6B: Illustration of a gasket connected to a side of a spacer

### DETAILED DESCRIPTION OF THE INVENTION

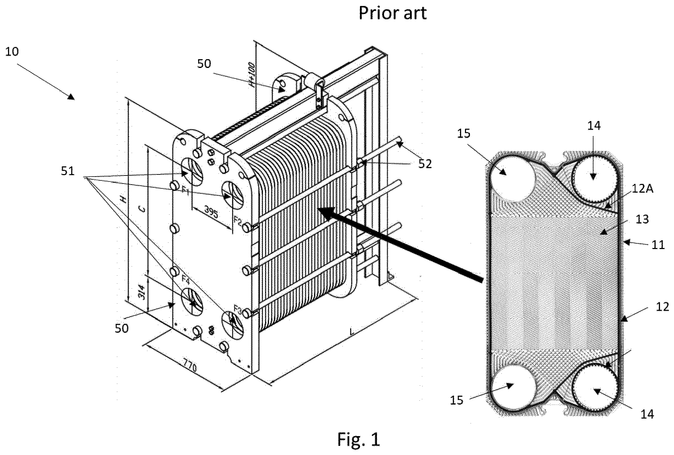

Fig. 1 shows one example of a plate heat exchanger (10) formed of a collection, or stack, of structured heat transfer plates (11). Each of the heat transfer plates (11) is provided with two pairs of openings, where a first pair (14) provides and inlet and outlet for a first flow path formed at the one side of the heat transfer plate (11), and the second pair (15) provides an inlet and outlet for a second flow path formed at the second side of the heat transfer plate (11), the second side being opposite the first side. The openings (14, 15) of the stacked heat transfer plates (11) forming channels through the plate stack. In the illustrated example the heat transfer plates (11) at a rim portion is adapted to accommodate a gasket (12) to respectively seal the flow paths formed between each two neighbouring plates (11) from the externals, and to seal one pair of openings (14, 15)- where at the opposite side of the heat transfer plate (11) the respective other pair (15, 14) is sealed. Further the plate stack is arranged between two frame plates (50) being held together by bars (52) keeping the heat transfer plates (11) tight together under compression. At least one of the frame plates (50) include openings (51) aligned to the heat transfer plate openings (14, 15) and to be connected to external fluid pipes.

The heat transfer plates (11) being in direct contact with the fluids may be substantially thin to enable a fast exchange of heat between respectively a hot and cold fluid and are made of materials resistant to the media.

The frame plates (50) are relatively thick compared to the heat transfer plates (11) to withstand both the internal forces from the compressed stack of heat transfer plates (11), and what external impacts they may encounter.

The rim portion of the heat transfer plates (11) traditionally are patterned, such as by corrugations, to contact patterns of the adjoining neighbouring heat transfer plates (11), and to form a barrier for the gasket (12). The patterns may be connected by sections forming a wall against which the gasket (12) rests.

The gasket (12) positioned at the perimeter of the first and second flow paths formed between the connected heat transfer plates (11) including the heat transfer area (13), thus sealing the flow paths and heat transfer area (13) from the external of the heat exchanger (10).

The gasket (12) further is formed with gasket diagonal sections (12A) positioned the diagonal areas of the heat transfer plates (11). A diagonal area is the intersection between an opening (14, 15) and the heat transferring area (13). A gasket (12) at the one side of the provides a gasket diagonal section (12A) for the second pair (15, 14) of openings, sealing them from the first flow path, and a gasket (12) at the second side provides a gasket diagonal second (12A) for the first pair (14, 15) of openings, sealing them from the second flow path.

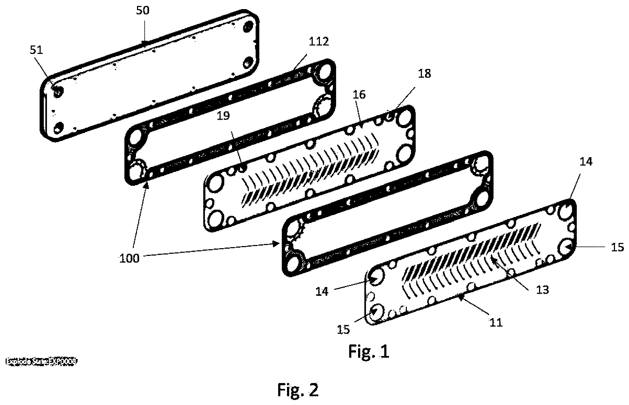

Fig. 2 illustrates an alternative gasket kind heat exchanger (10) where spacers (100), or gasket units (100), are positioned between the heat transfer plates (11) in a plate rim region (16). The figure illustrates the parts in the heat exchanger (10) and not the parts when fully assembled into a heat exchanger (10).

In the following, when referring to spacer (100) it would also refer to a gasket unit (100) and vice versa.

The spacer (100) may be formed with a base part (101) that comprises an outer gasket-free section (101A) and inner gasket section (101B) with the gasket (102). The outer gasket-free section (101A) may be formed assisting means (19, 119, 120, 118) such as alignment/guiding means (19, 119, 120) for guiding the spacer (100) into the correct orientation and position, and/or connection or locking means (118) for connecting or locking the spacer (100) in position. Both sections (101A, 101B) are adapted to contact the two heat transfer plates (11) when stacked into a heat exchanger (11), but where only the gasket is adapted to be compressed between the two heat transfer plates (11). This enables the base part (101) including the outer gasket-free section (101) to form the support for the plate rim regions (16), and the gasket (12) in the inner gasket section (101B) to form the seal of the inner heat transferring area (13) towards the externals, and the outer gasket-free section (101).

The outer gasket-free section (101A) may constitute a width being at least 2/3 of the full width of the spacer (100), or even 3/4 or 4/5. Correspondingly, the inner gasket section (101B) may constitute a width being less than or equal to 1/3, or 1/4 or 1/5 of the full width of the spacer (100).

A spacer (100) may be positioned between a frame plate (50) and the adjoining heat transfer plate (11), and between the individual heat transfer plates (11). Spacers (100) may be positioned between some of the heat transfer plates (11) or all of them.

The spacer (100) replaces the contact patterns traditionally formed at the rim portion of the heat transfer plates (11) for contacting patterns of the adjoining neighbouring heat transfer plates (11). The plate rim region (16) formed outside the heat transferring area (13) thus need not be patterned, but could be essentially flat, or plane, or at least not having sections or areas being in contact with neighbouring plates.

The assisting means of the spacer (100) may include spacer bar openings (118), such as formed in the outer gasket-free section (101A), adapted to be aligned with plate bar openings (18) formed in the plate rim region (16). These form means for connecting or locking the spacers (100) in position. When the heat transfer plates (11) is stacked with the spacers (100) in-between, and with frame plates (50) on top and bottom. Bars then can be introduced trough the spacer bar openings (118), plate bar openings (18) and openings in the frame plates. The parts then can be held in tight connection e.g. by bolts positioned at the ends of the bars. This has the additional advantage of keeping the spacers (100) fixed in position.

In one embodiment connecting or locking means of the assisting means could be formed as a feature of the outer gasket-free section (101A) projection upwards adapted to fit into an opening or projection formed in the rim regions (16).

An inner hollow (103) is formed within the spacer (100) and encircled by the base part (101) and gasket (102). Where the base part (101) is adapted to be sandwiched between the rim regions (16) of two adjacent heat transfer plates (11) of a plate heat exchanger (10), the inner hollow (103) is adapted for the two heat transfer plates (10) to contact in a heat transferring area (36) defined by said two connected heat transfer plates (11).

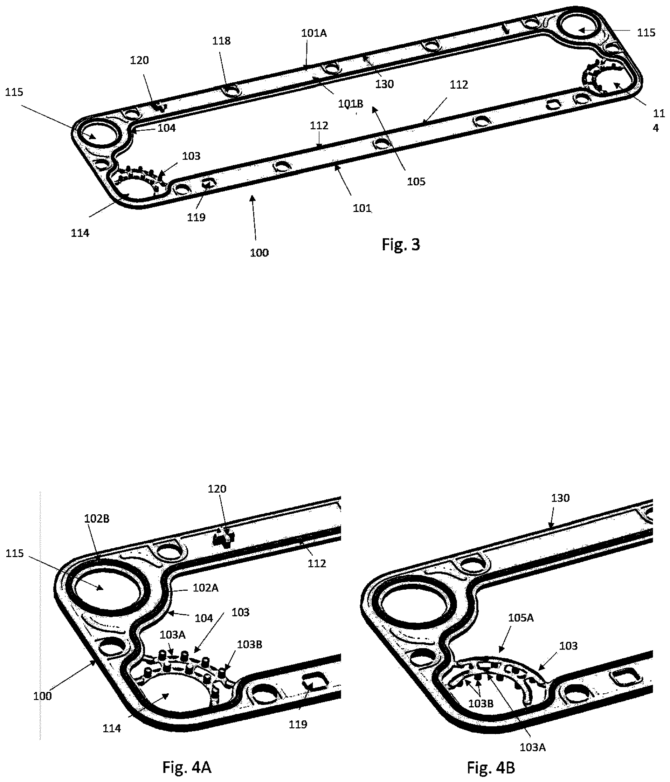

Fig. 3 shows the spacer (100) including two pair spacer openings (114, 115) adapted to be aligned with the plate openings (14, 15).

The gasket (102, 102A, 102B) is incorporated as a part of the spacer (100), making it a gasket unit (100), or is fixed thereto, or is possible inserted into recesses or grooves formed in the spacer (100) surface. The gasket (102, 102A, 102B) could e.g. be moulded to the spacer (100), such as by injection moulding.

To assist the assembly and ensure a correct orientation of the spacer (100), the assisting means may include poka-yoke projecting features (120) adapted to fit with poka-yoke receiving features (19) formed in the heat transfer plates (11), such as in the plate rim region (16). The shape and/or of the poka-yoke projecting features (120) and associated plate poka-yoke receiving features (19) is such that only a correct orientation and positioning of the spacer (100) relative to the heat transfer plate (11) is possible. In an alternative embodiment the heat transfer plate (11) is formed with the poka-yoke projecting features (120) and the spacer (100) with the poka-yoke receiving feature (19). In any embodiment the spacer (100) could be provided with poka-yoke receiving features (119) adapted to align with the plate poka-yoke receiving features (19).

Not all surfaces of the spacer (100) need to be in contact with the heat transfer plates (11), it could e.g. comprise contact sections (130), such as raised edges along the edge of the spacer (100), around the rims of spacer bar openings (118), by projections, or just as projections. In the same manner the spacer as such could be or formed with a lattice formation or in general just being hollow at the external part relative to the gasket (102, 102A, 102B). This reduces the amount of material used for the spacer (100) and lowers the weight.

Fig. 4A shows a section of the spacer (100) in the area of two spacer openings (114, 115), a first spacer opening (114) for the first flow path, and second spacer opening (115) for the second flow path.

The spacer (100) may include a sealed diagonal support (104) section connecting the main part of the spacer (100) at two positions at opposite sides of a spacer opening (114, 115). The sealed diagonal support (104) is provided with a diagonal section (102A) of the gasket, which in the same manner connects to the main gasket (102) at two positions at opposite sides of the spacer opening (114, 115). The sealed diagonal support (104) is adapted to be positioned in a diagonal section of a heat transfer plate (11), and thus forms a separation wall between the spacer opening (114, 115) and the inner hollow (103), and thus when sandwiched between two heat transfer plates (11) in an assembled heat exchanger, forms a seal between the plate opening (14, 15) and heat transfer area (13).

In traditional heat exchanger the heat transfer plates (11) may be formed with a pattern contacting the neighboring heat transfer plates (11) for support, leaving channels or openings for the fluid to pass.

In this embodiment the diagonal areas of the heat transfer plates (11) need not be formed with any supporting structures or patterns, but could be essentially flat or plan, or at least not be in direct contact with the neighboring heat transfer plates (11).

A second gasket (102B) connected to the support (100) may be formed to circumference of a spacer opening (114, 115) and may be separated from the gasket (112) and diagonal gasket section (112A) or connected to either of them. As illustrated, the main part of the gasket (112) and the diagonal gasket section (112A) may extend as one continuous part without a section at the outer side of the spacer openings (114, 114). In an alternative embodiment the main gasket part (112) perimeters the spacer (100) and all the spacer openings (114, 115) and the diagonal gasket section (112A) extend at the inside of the openings (114, 115) to be sealed from the inner hollow (105) like a branch connecting the main gasket (112) part at two sides of the respective openings (114, 115).

The spacer (100) may comprise supporting means (103) for the areas adapted to support the areas of the heat transfer plates (11) of the openings (14, 15) of the heat transfer plates (11) to be unsupported by a gasket, to allow flow passing the heat transferring area (13). This could be formed as porous diagonal support (103) section(s). This part is adapted to support the heat transfer plates (11) in otherwise unsupported sections, such as the diagonal areas associated with the plate openings (14, 15) where flow is to pass to and from the heat transferring area (13). In traditional heat exchanger the heat transfer plates (11) in this area may be formed with a pattern contacting the neighboring heat transfer plates (11) for support, leaving channels or openings for the fluid to pass.

In this embodiment the diagonal areas of the heat transfer plate (11) need not be formed with any supporting structures or patterns, but could be essentially flat or plan, or at least not be in direct contact with the neighboring heat transfer plates (11).

In the illustrated embodiment the porosity of the porous diagonal support (103) is ensure by diagonal spacer flow paths (103A) formed between diagonal spacer supports (103B) adapted to contact the two neighbouring heat transfer plates (11). The diagonal spacer flow paths (103A) could be formed in any manner, such as holes or pores on an otherwise solid porous diagonal support (103), as the free sections between the diagonal spacer supports (103B) or in any other form.

Fig. 4B shows the other side of the support (100) relative to fig. 4A, where the one side of the porous diagonal support (103) is seen having a flat surface forming a common diagonal support part (103B) contacting the surface of one of the heat transfer plates (11), at the other side being formed with the pillar like diagonal support parts (103B) to contact the adjoining neighbouring heat transfer plate (11).

In the illustrated embodiment the porous diagonal support (103) is formed of two connected concentric semi-circular parts positioned in a diagonal area) and contacts the main part of the spacer (100) at the opposite sides of a spacer opening (114, 115).

The spacer (100) may be formed with the gasket (102, 102A, 102B) at both surfaces, thus having a gasket (102, 102A, 102B) part, or a gasket surface, contacting both the upper and lower of the two adjoining neighbouring heat transfer plates (11). In one embodiment a gasket (102, 102A, 102B) is positioned or formed at both surfaces.

As previously indicated, the gasket (102) may be positioned at an inner rim portion of the spacer (100), such as at a base part inner gasket section (101B), such that the portion external to the heat transferring area (13), such as the base part outer gasket-free section (101A). can be formed with openings etc., such as the spacer bar openings (118). This ensures these openings are sealed from the flow paths within the heat exchanger (10).

In one embodiment the base part (101) is formed of two individual parts, the base part outer gasket-free section (101A) positioned at the outside of a base part inner gasket section (101B). The outer base part outer gasket-free section (101A) thus forms an outer support for the base part inner gasket section (101B) holding it in position, where the outer base part gasket-free section (101A) could be fixed such as by the bars (52).

In another embodiment the gasket (12, 112) is positioned against the inside edge surface of the outer base part gasket-free section (101A), this thus forming the spacer (100) and outer support for the gasket (12, 112). In this embodiment the inner edge surface possible could be shaped to match the shape of the gasket (12, 112).

In one embodiment a gasket unit (100) is introduced with the base part (101) includes a base part inner gasket section (101B) with the gasket (102, 102A, 102B). The rigidness of the base part (101) then would assist in keeping the gasket (102, 102A, 102B) in position, and the concept could be combined with the traditional corrugations in the plate rim region (16) at the outside of the gasket unit (100), which would prevent it from being squeezed out of position under the pressures in the heat exchanger (10).

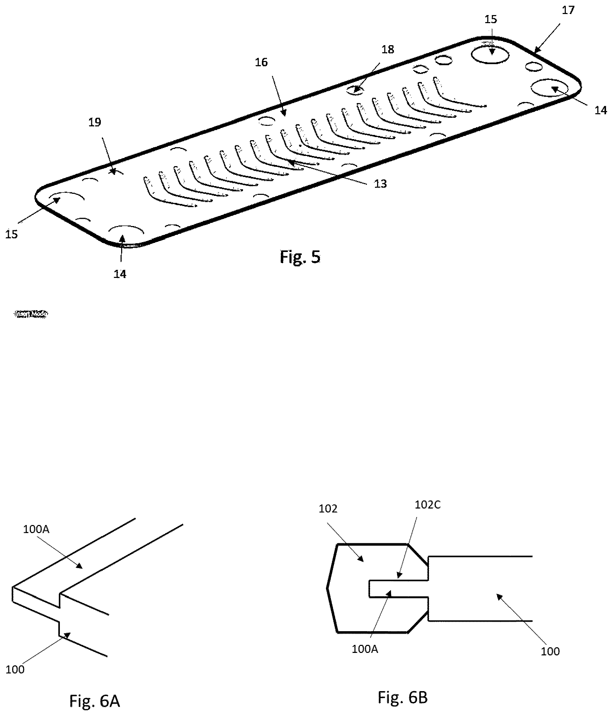

Fig. 5 shows an embodiment heat transfer plate (11) adapted to be assembled into a heat exchanger (10) with spacers (100) in-between, where in addition to the projections or corrugations defining the flow paths in the heat transferring area (13), the outer rim portion is bend (17). The bend outer rim (17) may contact the outer surface of the spacer (100) when stacked, and thus assist in keeping it in position. A further advantage is the bend outer rim (17) assists in guiding the heat transfer plate (11) into position when assembling the heat exchanger (10).

The bend section (17) may be smooth as illustrated, or may itself be formed, such as having a wavy or corrugated shape to increase strength.

Fig. 6A and 6B shows an embodiment where a free gasket (102) is adapted to be connected to the spacer (100), such as to its inner side facing the inner hollow (105). In the illustrated embodiment the spacer (100) is formed with a connection section (100A) adapted to fit with a gasket connection section (102C). Either of the spacer connection section (100A) or gasket connection section (102C) could be formed as an extension (100A) adapted to fit into the recess (102C) of the other. In the illustration the spacer (100) is provided with the extension, and the gasket (102) with the recess, but the reverse is also possible.

In one embodiment the parts such as the porous diagonal support (103) including the diagonal spacer supports (103B), and/or the sealed diagonal support (104) is formed by the same material as the gasket. In the embodiment where the gasket (102) is positioned at the inner surface facing the inner hollow (105), the porous diagonal support (103) including the diagonal spacer supports (103B), and/or the sealed diagonal support (104), could be formed as a part of the gasket (102) rather than the spacer (100).

### List of references:

- 10 -: Plate heat exchanger
- 11 -: Heat transfer plates
- 12 -: Gasket
- 12A -: Gasket diagonal section
- 13 -: Heat transferring area
- 14 -: Opening for first flow path
- 15 -: Opening for second flow path
- 16 -: Plate rim region
- 17 -: Outer bend plate rim section
- 18 -: Plate bar opening
- 19 -: Poke yoke plate receiving feature
- 50 -: Frame plate
- 51 -: Frame plate openings
- 52 -: Bars and bolts
- 100 -: Spacer insert/gasket unit
- 100A -: Spacer connection section
- 101 -: Base part
- 101A -: Base part outer gasket-free section
- 101B -: Base part inner gasket section
- 102 -: Gasket
- 102A -: Gasket diagonal section
- 102B -: Second gasket
- 102C -: Gasket connection section
- 103 -: Porous diagonal support (section)
- 103A -: Diagonal spacer flow paths
- 103B -: Diagonal spacer supports
- 104 -: Sealed diagonal support (section)
- 105 -: Inner hollow
- 114 -: Spacer opening for first flow path
- 115 -: Spacer opening for second flow path
- 118 -: Spacer bar openings
- 119 -: Poke yoke insert receiving feature
- 120 -: Poke yoke projecting feature
- 130 -: Contact sections

## Claims

1. A gasket unit (100) adapted to be sandwiched between the rim regions (16) of two adjacent heat transfer plates (11) of a plate heat exchanger (10), where the gasket unit (100) is formed of a base part (101) with a gasket (102, 102A, 102B) on the surface.

2. A spacer (100) according to claim 1, wherein the base part (101) is substantially more rigid and incompressible than the gasket (102, 102A, 102B) material.

3. The gasket unit (100) according to claim 2, wherein the base part (101) is incompressible to the forces prevailing in an assembled heat exchanger (10) to prevent significant deformation when assembled into the heat exchanger (10), whereas the gasket (102, 102A, 102B) is made of a material sufficiently soft to be compressed and deformed when sandwiched between the two heat exchanger plates (11) to ensure full contact.

4. The gasket unit (100) according to claim 1, 2 or 3, wherein a gasket (102, 102A, 102B) part is formed on both surfaces of the base part (101) adapted to face the respective two heat exchanger plates (11).

5. The gasket unit (100) according to one of claims 1-4, wherein the gasket (102) encircles an inner hollow (105) of said base part (101).

6. The gasket unit (100) according to claim 5, wherein the inner hollow (105) is adapted for the two heat transfer plates (10) to contact in a heat transferring area (36) defined by said two heat transfer plates (11) when connected in a heat exchanger (10).

7. The gasket unit (100) according to any of the preceding claims, wherein the base part (101) is formed with a sealed diagonal support (104) with a diagonal gasket section (102A) adapted to separate a spacer opening for the first or second flow path opening (114, 115) from the inner hollow (105), and adapted to be positioned in the diagonal area of a heat transfer plate (11) adapted to seal fluid communication between the respective first or second flow path (114, 115) and the heat transferring area (13) of the heat transfer plate (11).

8. The gasket unit (100) according to any of the preceding claims, wherein a second gasket (102B) separated from the gasket (102) encircles a first or second flow path opening (114, 115)

9. The gasket unit (100) according to any of the preceding claims, wherein the gasket (102, 102A, 102) is incorporated as a part of the base unit (101).

10. The gasket unit (100) according to any of the preceding claims, wherein the gasket (102, 102A, 102) is moulded to the spacer (100), such as by injection moulding.

11. The gasket unit (100) according to any of the preceding claims, wherein the base part (101) includes an outer gasket-free section (101A) and inner gasket section (101B) with the gasket (102), where both sections (101A, 101B) are adapted to contact the two heat transfer plates (11), where only the gasket is adapted to be compressed between the two heat transfer plates (11).

12. The gasket unit (100) according to claim 11, wherein outer gasket-free section (101A) is formed with assisting means (19, 119, 120, 118) such as alignment/guiding means (19, 119, 120) for guiding the spacer (100) into the correct orientation and position, and/or connection or locking means (118) for connecting or locking the spacer (100) in position.

13. A heat exchanger (10) formed of a stack of structured heat transfer plates (11) each provided with two pairs of openings (14, 15), each pair providing an inlet and outlet to respectively a first flow path at the one side and a second flow path at the second side of the heat transfer plate (11), and where a gasket unit (100) according to any of the preceding claims is positioned between at least two adjoining neighbouring heat transfer plates (11) in a plate rim region (16).

14. A heat exchanger (10) according to claim 13, wherein the gasket unit (100) is positioned between any two adjoining neighbouring heat transfer plates (11).

15. A heat exchanger (10) according to claim 13 or 14, wherein the stack of heat transfer plates (11) is positioned between two frame plates (50), and where a gasket unit (100) is positioned between a frame plate (50) and the adjoining neighbouring heat transfer plate (11).
